(19) Europäisches Patentamt
European Patent Office
Office européen des brevets

(11) **EP 4 599 994 A1**

(12) **EUROPEAN PATENT APPLICATION**

(43) Date of publication:
**13.08.2025 Bulletin 2025/33**

(21) Application number: **24156274.3**

(22) Date of filing: **07.02.2024**

(51) International Patent Classification (IPC):
***B25J 9/16*** (2006.01)

(52) Cooperative Patent Classification (CPC):
**B25J 9/1664;** G05B 2219/39536; G05B 2219/39546

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventors:
• **Jaquier, Noemie
76131 Karlsruhe (DE)**
• **Rozo, Leonel
71032 Boeblingen (DE)**

Remarks:
Amended claims in accordance with Rule 137(2)
EPC.

(54) **DEVICE AND METHOD FOR CONTROLLING A ROBOT**

(57) According to various embodiments, a method for controlling a robot is described comprising, comprising determining, for each robotic pose of a plurality of predetermined robot trajectories, a respective embedding in an embedding space (202) having the structure of a hyperbolic manifold by searching an optimum of an objective function which incites, for each of the predetermined robot trajectories, the embeddings of the robotic poses of the predetermined robot trajectory to follow predefined dynamics of the embedding space (202), determining, for a starting pose from which the robot is to be controlled, a start embedding in the embedding space (202), and, for a desired end pose, an end embedding in the embedding space (202) and a geodesic (203) between the start embedding and the end embedding according to a pullback metric of the embedding space (202) and controlling the robot according to a sequence of robotic poses given by the determined geodesic (203).

Fig. 3

EP 4 599 994 A1

**Description**

The present disclosure relates to devices and methods for controlling a robot, in particular a robotic hand.

Robotic grasping is a fundamental skill required for manipulating objects in cluttered environments, e.g. in bin picking applications. A multi-fingered robotic hand mimics the human hand's structure, enabling complex object manipulations.

The publication T. Feix, J. Romero, H.-B. Schmiedmayer, A. M. Dollar, and D. Kragic, "The grasp taxonomy of human grasp types," IEEE Transactions on Human-Machine Systems, vol. 46, no. 1, pp. 66-77, 2016, in the following referred to as reference [1], analyzes and compares existing human grasp taxonomies and synthesizes them into a single new taxonomy (dubbed "The GRASP Taxonomy"). Only static and stable grasps performed by one hand are considered. The goal is to extract the largest set of different grasps that were referenced in the literature and arrange them in a systematic way. The taxonomy provides a common terminology to define human hand configurations and is important in many domains such as human-computer interaction and tangible user interfaces where an understanding of the human is basis for a proper interface. Overall, 33 different grasp types have been found and arranged into the GRASP taxonomy. Within the taxonomy, grasps are arranged according to 1) opposition type, 2) the virtual finger assignments, 3) type in terms of power, precision, or intermediate grasp, and 4) the position of the thumb. The resulting taxonomy incorporates all grasps found in the reviewed taxonomies that complied with the grasp definition.

The publication F. Stival, S. Michieletto, M. Cognolato, E. Pagello, H. Müller, and M. Atzori, "A quantitative taxonomy of human hand grasps," Journal of NeuroEngineering and Rehabilitation, vol. 16, no. 28, 2019, the following referred to as reference [2], describes a hand grasp taxonomy in the form of a graph as well as a distance measure (Mahalabonis distance) between the considered grasps (i.e. hand poses).

Building on the GRASP taxonomy of reference [1], the publication J. Romero, T. Feix, H. Kjellström, and D. Kragic, "Spatio-temporal modeling of grasping actions," in IEEE/RSJ International Conference on Intelligent Robots and Systems, pp. 2103-2108, 2010, in the following referred to as reference [3], describes a Gaussian Process Latent Variable Model (GPLVM) with back-constraints to capture grasp actions aligned with a specific taxonomy. Notably, the taxonomy structure was not directly integrated into the training process; instead, the authors relied on the inherent emergence of clusters in the latent space corresponding to various grasp types within the taxonomy.

The discrete representation of taxonomies poses challenges for motion generation. To address these limitations, the publication N. Jaquier, L. Rozo, M. González-Duque, V. Borovitskiy, and T. Asfour, "Bringing robotics taxonomies to continuous domains via GPLVM on hyperbolic manifolds," arXiv:2210.01672 preprint, 2022, in the following referred to as reference [4], introduced the GPHLVM (Gaussian process hyperbolic latent variable model), which models taxonomy data as embeddings capturing the associated hierarchical structure. GPHLVM leverages a hyperbolic manifold to embed hierarchical taxonomy data. These embeddings can be considered a continuous representation of the initially discrete taxonomy.

In reference [4], the GPHLVM methodology is applied to the "whole-body pose" taxonomy, the "quantitative grasping" taxonomy, and the "bimanual manipulation" taxonomy. For each taxonomy, high-dimensional observations (hand poses) comprising the joint angles have been collected and each pose has been embedded into a two-dimensional hyperbolic manifold $\mathbb{H}^2_{\mathcal{L}}$. The high-dimensional observations belonging to the same taxonomy node were closely embedded in the hyperbolic space, forming distinct clusters. The clusters were embedded such that geodesics between them traversed intermediate clusters, aligning with the expected taxonomy structure. For instance, when two taxonomy nodes, A and C, were connected only through an intermediary node B, the geodesic path from cluster A to C in the latent space also traverses the region of cluster B. Therefore, the hyperbolic manifold and the use of domain knowledge via taxonomy graphs allowed learning embeddings that follow the hierarchical structure of the original data.

Given the GPHLVM's capability to map latent points to the high-dimensional joint space, it effectively utilized latent geodesics for motion generation. However, although the GPHLVM could generate motions that broadly conformed to the structure of the taxonomy, there were instances where these motions proved physically impractical. A reason for this is that GPHLVM relies on high-dimensional training data only within the latent clusters, and no training data is available in the regions between clusters. In the regions between clusters, no training data is available to support motion predictions, causing the GPHLVM to revert to the non-informative default case, i.e., the Gaussian Process mean.

Therefore, approaches for generation of physically-consistent motion for robot hand control (or other robot motions that can be associated with a taxonomy) via geodesics on a hyperbolic manifold are desirable.

According to various embodiments, a method for controlling a robot is provided comprising determining, for each robotic pose of a plurality of predetermined (e.g. observed and/or demonstrated) robot trajectories, a respective embedding in an embedding space having the structure of a hyperbolic manifold by searching an optimum of an objective function which incites, for each of the predetermined robot trajectories, the embeddings of the robotic poses of the predetermined robot trajectory to follow pre-defined dynamics of the embedding space, determining, for a starting pose from which the robot is to be controlled, a start embedding in the embedding space, and, for a desired end pose, an end embedding in the embedding space and a geodesic between the start embedding and the end embedding according to a pullback metric of the embedding space and controlling the robot according to a sequence of robotic poses given by the determined geodesic.

The method described above allows controlling a robot (e.g. a robot hand) from a starting pose to a desired end pose in a physically consistent manner, in particular avoiding physically impractical motions.

More specifically, the method described above provides a taxonomy-consistent motion generation mechanism based on low-dimensional trajectories (namely trajectories in the hyperbolic embedding space) obtained via geodesic interpolation (between the embeddings of start and end pose) and a pullback metric. According to various embodiments, a model prior is used to cause the trajectories to follow the first-order Riemannian linear dynamics to ensure that the decoded trajectories are physically feasible.

Further, according to various embodiments, the observed trajectories (i.e. hierarchical high-dimensional trajectory data) are embedded into a low-dimensional hyperbolic latent space where embeddings are organized according to a taxonomy that is specific to the observed trajectories.

In the following, various examples are given.

Example 1 is a method for controlling a robot as described above.

Example 2 is the method of example 1, wherein determining the embeddings comprises determining parameters of an encoder which maps robotic poses (e.g. robotic hand poses) to embeddings and wherein the start embedding and the end embedding are determined by encoding the starting pose and the end pose using the encoder, respectively.

Training an encoder in this manner allows adding additional observations (i.e. observed trajectories) at a later stage (e.g. for additional robotic poses, e.g. grasp types).

Example 3 is the method of example 1 or 2, wherein controlling the robot according to the sequence of robotic poses comprises determining the sequence of robotic poses by mapping a sequence of embedding space elements given by the determined geodesic to robotic pose space using a decoder (i.e. decoding function or mapping) and controlling the robot to follow the sequence of robotic poses and wherein the pullback metric is the pullback metric according to the Jacobian of the decoder and Euclidean metric of robotic poses (wherein the geodesic is computed according to the pullback metric).

Thus, it is ensured geodesics that are followed when controlling the robot are smooth in "real space" i.e. change robotic (e.g. hand) poses smoothly, without abrupt changes in the pose.

The objective function for example includes a likelihood term which incites the embeddings to be determined such that they are decoded by the decoder to the predetermined trajectories.

Example 4 is the method of any one of examples 1 to 3, wherein the decoder implements a Gaussian process (i.e. the decoding function is a Gaussian process).

Using a Gaussian process as decoder, i.e. as generative mapping from latent variables (i.e. embedding space elements to "real space" robotic poses) allows high data efficiency and provides automatic uncertainty quantification.

Example 5 is the method of any one of examples 1 to 4, wherein the objective function further comprises a term which, according to a taxonomy of robotic poses which includes a similarity measure between robotic poses, incites the embeddings to be determined such that the distance of embeddings of robotic poses in embedding space reflects the similarity of the robotic poses according to the taxonomy.

Thus, the embeddings are organized according to the taxonomy such that the control is in line with the taxonomy.

Example 6 is a controller configured to perform a method of any one of examples 1 to 5.

Example 7 is a computer program comprising instructions which, when executed by a computer, makes the computer perform a method according to any one of examples 1 to 6.

Example 8 is a computer-readable medium comprising instructions which, when executed by a computer, makes the computer perform a method according to any one of examples 1 to 6.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1    shows a robot.

Figure 2    illustrates a control of a robotic hand according to an embodiment.

Figure 3    shows a flow diagram illustrating a method for controlling a robot according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

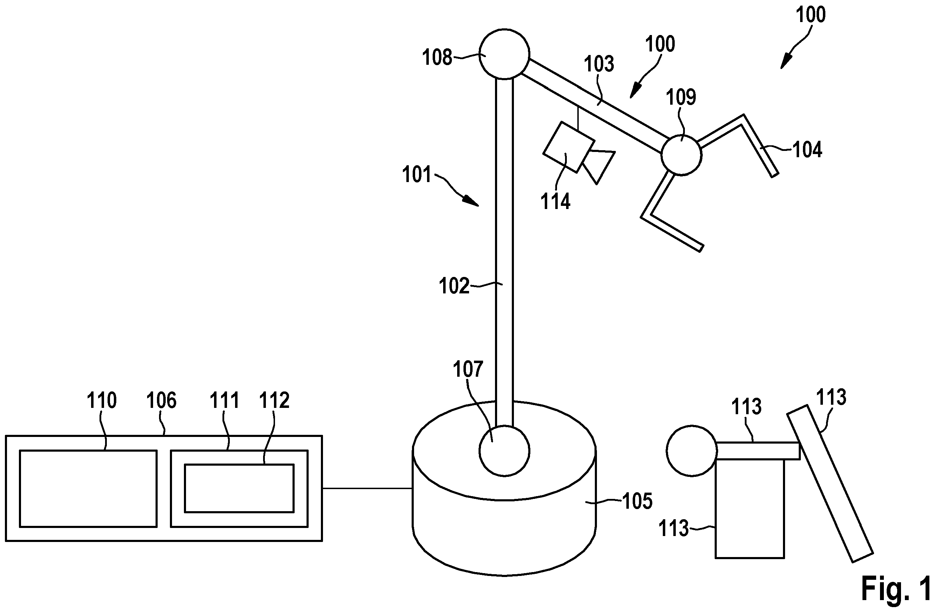

Figure 1 shows a robot 100.

The robot 100 includes a robot arm 101, for example an industrial robot arm for handling or assembling a work piece (or one or more other objects 113). The robot arm 101 includes manipulators 102, 103, 104 and a base (or support) 105 by which the manipulators 102, 103, 104 are supported. The term "manipulator" refers to the movable members of the robot arm 101, the actuation of which enables physical interaction with the environment, e.g. to carry out a task. For control, the robot 100 includes a (robot) controller 106 configured to implement the interaction with the environment according to a control program. The last member 104 (furthest from the support 105) of the manipulators 102, 103, 104 is also referred to as the end-effector 104 and includes a grasping tool (which may also be a suction gripper).

The other manipulators 102, 103 (closer to the support 105) may form a positioning device such that, together with the end-effector 104, the robot arm 101 with the end-effector 104 at its end is provided. The robot arm 101 is a mechanical arm that can provide similar functions as a human arm.

The robot arm 101 may include joint elements 107, 108, 109 interconnecting the manipulators 102, 103, 104 with each other and with the support 105. A joint element 107, 108, 109 may have one or more joints, each of which may provide rotatable motion (i.e. rotational motion) and/or translatory motion (i.e. displacement) to associated manipulators relative to each other. The movement of the manipulators 102, 103, 104 may be initiated by means of actuators controlled by the controller 106.

The term "actuator" may be understood as a component adapted to affect a mechanism or process in response to be driven. The actuator can implement instructions issued by the controller 106 (the so-called activation) into mechanical movements. The actuator, e.g. an electromechanical converter, may be configured to convert electrical energy into mechanical energy in response to driving.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example.

In the present example, the controller 106 includes one or more processors 110 and a memory 111 storing code and data based on which the processor 110 controls the robot arm 101. According to various embodiments, the controller 106 controls the robot arm 101 on the basis of a machine-learning model stored in the memory 111, in particular, according to various embodiments, a Gaussian Process Hyperbolic Dynamical Model (GPHDM) as described in detail below.

The end-effector 104 may be a multi(e.g. five)-fingered hand, i.e. a robotic hand. This means that the end-effector 104 has a high number of degrees of freedom: in addition to its "global" pose, i.e. its position and orientation in space, it has additional degrees of freedom for finger joint angles. The increased amount of degrees of freedom increases the complexity of the control. In particular, approaches designed for control of parallel grippers are typically not suitable for controlling an end-effector 104 which has the form of a multi-fingered hand. In the following, a (robotic hand or gripper) "pose" is meant to includes the complete pose, i.e. the position and orientation of all components of the robotic hand which can move independently from each other.

As explained above, the GPHLVM model described by reference [4] allows generating embeddings of observed robotic hand poses in a hyperbolic manifold (i.e. an embedding space (or latent space) having the form of a hyperbolic manifold) such that high-dimensional observations belonging to the same taxonomy node are closely embedded in a hyperbolic space, forming distinct clusters and such that geodesics between them traverse intermediate clusters, aligning with the expected taxonomy structure, but generates motions which are physically impractical.

Therefore, according to various embodiments, a dynamics prior on hyperbolic manifold is incorporated into GPHLVM, resulting in an approach which is called Gaussian Process Hyperbolic Dynamical Model (GPHDM). It imposes a first-order Riemannian dynamical model prior on the embeddings learned by GPHLVM. This allows retrieving dynamics-aware (and thus physically-consistent motion) trajectories from geodesics generated in the GPHLVM latent space.

GPHDM differs from the classical GPDM in that it leverages the hyperbolic geometry on the latent space in order to accommodate the hierarchical structure of the observed data, which is associated with a corresponding taxonomy. It uses geodesics with respect to a pullback metric which provide as dynamically-consistent motion trajectories.

More specifically, according to various embodiments, a linear dynamics model is formulated based on the first-order Markov assumption on Riemannian manifolds to give a hyperbolic dynamics prior based on a Riemannian Gaussian distribution on the model's latent space, i.e. a dynamics prior is built on a first-order Riemannian linear dynamics, and motion trajectories on the hyperbolic space are generated via pullback metrics and geodesic interpolation.

In the following, an embodiment is described in detail.

First, a Gaussian process dynamical model (GPDM) on a hyperbolic manifold is formulated. To do so, a hyperbolic dynamics prior is formulated similarly to the Euclidean case. A linear dynamics model based on the Markov assumption is assumed

$$f_A(x_t) = \text{Exp}_{x_t}(V_{x_t} A^\top \phi_t) \tag{1}$$

for a parameter matrix $A \in \mathbb{R}^{N_\phi \times D_x}$ and basis vectors

$$\phi_t = \begin{bmatrix} \phi_1(x_t) & \dots & \phi_{N_\phi}(x_t) \end{bmatrix}^\top \in \mathbb{R}^{N_\phi}.$$

obtained from a current latent point $x_t$ as in the Euclidean case. It should be noted that in the Euclidean case, the exponential map reduces to a simple addition:

$$f_A(x_t) = x_t + \sum_{i=1}^{N_\phi} a_i \phi_i(x_t) = x_t + A^\top \phi_t \tag{2}$$

The remaining difference to the Euclidean case is the basis vector matrix $V_{x_t} \in \mathbb{R}^{(D_x+1) \times D_x}$. This basis vector matrix is used to represent hyperbolic tangent space vectors in local coordinates according to the Lorentz model. In this setting, $A^\top \phi_t \in \mathbb{R}^{D_x}$ denotes a tangent space vector at $x_t$ represented in local coordinates. By linearly combining the basis vectors weighted by the local coordinates of the tangent space a change of basis is performed and the corresponding Lorentz representation $V_{x_t} A^\top \phi_t \in \mathcal{T}_{x_t} \mathbb{H}_{\mathcal{L}}^{D_x}$ is obtained.

Besides the linear dynamics model, noise is introduced to make the model probabilistic as follows:

$$x_{t+1} = \text{Exp}_{f_A(x_t)}(V_{f_A(x_t)} \tilde{\epsilon}_t), \qquad \tilde{\epsilon}_t \sim \mathcal{N}(0, \tilde{\Sigma}_x). \tag{3}$$

It should be noted that the noise vector $\tilde{\epsilon}_t \in \mathbb{R}^{D_x}$ is also given in local coordinates. To represent the noise as a hyperbolic tangent space vector it is multiplied with the basis vector matrix $V_{f_A(x_t)} \in \mathbb{R}^{(D_x+1) \times D_x}$. To simplify the notation, the degenerate noise covariance matrix is defined as

$$\Sigma_x = V_{f_A(x_t)} \tilde{\Sigma}_x V_{f_A(x_t)}^\top \in \mathbb{R}^{(D_x+1) \times (D_x+1)}.$$

Having introduced noisy observations, the next step is to compute the probability density function of the state $x_{t+1}$ given $x_t$ as follows:

$$p(x_{t+1} \mid x_t, A) = \mathcal{N}_{\mathbb{H}_{\mathcal{L}}^{D_x}}(x_{t+1} \mid f_A(x_t), \Sigma_x) \tag{4}$$

$$\approx \mathcal{N}(\text{Log}_{x_t}(x_{t+1}) \mid V_{x_t} A^\top \phi_t, \Gamma_{f_A(x_t) \to x_t}(\Sigma_x)) \tag{5}$$

$$\approx \mathcal{N}(\tilde{x}_{t+1} \mid A^\top \phi_t, \tilde{\Sigma}_x) \tag{6}$$

More precisely, in equation (4), the PDF (probability density function) is formulated in terms of a Riemannian Gaussian distribution. Then, an approximation of the hyperbolic PDF by the Euclidean PDF on the tangent space w.r.t the current state $x_t$ is used. To achieve this, the logarithmic map of the mean $f_A(x_t)$ and the parallel transport of the degenerate covariance matrix $\Sigma$ are used. It should be noted that the Lorentzian (hyperbolic) tangent space vectors are represented in local coordinates and the definition $\tilde{x}_{t+1} := V_{x_t}^\top G \text{Log}_{x_t}(x_{t+1}) \in \mathbb{R}^{D_x}$ (and an analogous

definition of $\tilde{X}_t$) is used.

It should also be noted that as the basis vector matrix $V_{xt}$ consists of orthonormal basis vectors of the corresponding tangent space, the Lorentz product of two of such matrices equals the identity matrix

$$V_{x_t}^\top G V_{x_t} = I_{D_x}.$$

Now the hyperbolic dynamics prior can be derived by marginalizing out the parameters A, similar to the Euclidean case. For a single trajectory X of N latent variables $x_1, ..., x_N \in \mathbb{H}_{\mathcal{L}}^{D_x}$ the hyperbolic dynamics prior, following a first-order Markov chain assumption, is given as follows

$$p(X) = \int p(X \mid A) p(A) \, dA \tag{7}$$

$$= p(x_1) \int \prod_{t=2}^{N} p(x_t \mid x_{t-1}, A) p(A) \, dA \tag{8}$$

$$= p(x_1) \int \prod_{t=2}^{N} \mathcal{N}_{\mathbb{H}_{\mathcal{L}}^{D_x}} (x_t \mid f_A(x_{t-1}), \Sigma_x) p(A) \, dA \tag{9}$$

$$\approx p(x_1) \int \prod_{t=2}^{N} \mathcal{N}(\tilde{x}_t \mid A^\top \phi_{t-1}, \hat{\Sigma}_x) p(A) \, dA \tag{10}$$

$$= p(x_1) \prod_{d=1}^{D_x} \int \prod_{t=2}^{N} p(\tilde{x}_{t,d} \mid \phi_{t-1}^\top A_d, \sigma_{x,d}^2)$$
$$\mathcal{N}(A_d \mid 0, I_{N_\phi}) \, dA_d \tag{11}$$

$$\approx \mathcal{N}_{\mathbb{H}_{\mathcal{L}}^{D_x}} (x_1 \mid \mu_0, V_{\mu_0} V_{\mu_0}^\top)$$
$$\mathcal{N}_{\mathbb{H}_{\mathcal{L}}^{D_x}} (X_{2:N} \mid X_{1:N-1},$$
$$V_{1:N-1}(K_{1:N-1} + \tilde{\Sigma}_X) V_{1:N-1}^\top) \tag{12}$$

Like in the Euclidean case, the marginalization integral over the parameters A is first built and then the Markov property is applied to compute the conditional single-step distributions. It should be noted that equation (11) handles only terms that lie on Euclidean tangent spaces, hence the next steps are the same as in the Euclidean case. Further, it should be noted that since $\mathrm{Log}_{\mu 0}(x)$ is a tangent space vector at the origin, the metric tensor is not needed to represent it in local coordinates. Finally, equation (12) represents the final hyperbolic dynamics prior model.

The Gaussian Process Hyperbolic Dynamical Model (GPHDM) now combines the hyperbolic dynamics prior of (12) with the GPHLVM. The goal of the model is to embed each high-dimensional observed motions (i.e. trajectory, i.e. sequence of poses in "real" space, e.g. joint space)

$$Y = \begin{bmatrix} y_1 & ... & y_N \end{bmatrix}^{\top} \in \mathbb{R}^{N \times D_y}$$

into the hyperbolic latent space $\mathbb{H}_{\mathcal{L}}^{D_x}$ such that a low-dimensional latent variable $x_t \in \mathbb{H}_{\mathcal{L}}^{D_x}$ (i.e. pose embedding) is obtained for each corresponding observed pose $y_t$. Additionally, in the training of the model, the latent embeddings are required to preserve the trajectory structure of the high-dimensional motions while simultaneously resembling the graph structure of a robotics taxonomy.

This means that it is assumed that the robotics taxonomy is given as an undirected graph $G = (V,E)$ with nodes $V = \{c^1, ..., c^{Nc}\}$ and edges E between the nodes, as well as a distance measure $d_G$ between graph nodes (e.g. reflecting a similarity of poses represented by the graph nodes) as for example described in reference [2].

Further, it is assumed that fully-labelled training data $\{(y_t, c_t)\}_{t=1}^{N}$ is available, i.e., that for each observed pose $y_t \in \mathbb{R}^{D_y}$ the corresponding taxonomy node $c_t \in V$ is known (or can be determined from the taxonomy that is used).

Then, the optimization problem for determining the GPHDM optimization process can be written as follows:

$$W, \Theta = \underset{W,\Theta}{\operatorname{argmax}} \; \beta_1 \log p(Y \mid X, \Theta) + \beta_1 \log p(X \mid \Theta)$$

$$- \beta_3 \mathcal{L}_{\text{stress}}(X),$$
$$\text{s.t. } X = g_W(Y)$$

(13)

where the latent mapping, dynamics mapping, stress loss, and back-constraints are given by

$$p(Y \mid X, \Theta) = \mathcal{N}(Y \mid 0, K_X + \Sigma_Y)$$

(14)

$$p(X \mid \Theta) = \mathcal{N}_{\mathbb{H}_{\mathcal{L}}^{D_x}}(x_1 \mid \mu_0, V_{\mu_0} V_{\mu_0}^{\top})$$
$$\mathcal{N}_{\mathbb{H}_{\mathcal{L}}^{D_x}}(X_{2:N} \mid X_{1:N-1},$$
$$V_{1:N-1}(K_{1:N-1} + \Sigma_X)V_{1:N-1}^{\top})$$

(15)

$$\mathcal{L}_{\text{stress}}(X) = \sum_{i<j} \left( d_G(c_i, c_j) - d_{\mathbb{H}_{\mathcal{L}}^{D_x}}(x_i, x_j) \right)^2$$

(16)

$$g_W(Y) = \operatorname{Exp}_{\mu_0}(V_{\mu_0}(K_Y \cdot K_G)W)$$

(17)

It should be noted that $p(Y \mid X, \Theta)$ denotes the latent mapping, or likelihood, of the model. For given observations Y, the embeddings X and hyperparameters $\Theta$ are optimized, wherein the latter include the noise variance, the kernel outputscale, and the lengthscale. In other words, latent variables X and hyperparameters $\Theta$ should be find that describe the given data Y as close as possible in the sense of maximum likelihood estimation. However, the model would have no incentive to structure its latent space by solely optimizing the likelihood.

Therefore, the dynamics mapping $p(X \mid \Theta)$ is added as a prior to the objective function of the optimization problem (13), turning it into a maximum a posteriori estimation. It should be noted that the dynamics mapping induces consecutive latent points $x_t, x_{t+1}$ to keep close together and consequently form smooth latent trajectories. Additionally to the dynamics mapping, the stress loss $\mathcal{L}_{\text{stress}}$ is subtracted, which can be viewed as a second prior.

It should be noted that that maximizing the negative stress loss minimizes the difference between the pairwise node distance on the taxonomy graph (i.e. pose similarities according to the taxonomy) and the distance of the corresponding embeddings in the latent space. This induces the latent embeddings to resemble the taxonomy graph. The three individual losses, i.e., the latent mapping, the dynamic mapping, and the stress loss, are weighted using scalar weights $\beta_1, \beta_2, \beta_3 \in (0, 1)$ and are summed up to obtain the final GPHDM loss.

While it is possible to optimize this loss directly over the latent variables X, the parameters (e.g. weights) W of an encoder function $g_W$ (e.g. a neural network) are optimized. This also referred to as back-constraints. That allows embedding new observations after the training directly into the latent space without additional training using the encoder (function) trained in this manner. Furthermore, the encoder can be adapted to incorporate information about the taxonomy structure. According to one embodiment, point-wise multiplication is used to combine the SE (squared exponential) kernel on the observations $K_Y$ with the graph-Matérn kernel $K_G$ on the taxonomy nodes.

In total, according to various embodiments, the GPHDM relies on four different kernel functions. One multi-output hyperbolic heat kernel for the latent mapping $K_X \in \mathbb{R}^{ND_y \times ND_y}$ and one for the dynamics mapping $K_{1:N-1} \in \mathbb{R}^{(N-1)D_x \times (N-1)D_x}$ one Euclidean SE kernel for the back-constraints $K_Y \in \mathbb{R}^{N \times N}$ and one graph-Matérn kernel on the taxonomy nodes also for the back-constraints $K_G \in \mathbb{R}^{N \times N}$.

It should be noted that if one kernel function is shared across dimensions, the size of the kernel matrices can be significantly reduced to $K_X \in \mathbb{R}^{N \times N}$ and $K_{1:N-1} \in \mathbb{R}^{(N-1) \times (N-1)}$ which allows for lower memory requirements and faster training. It should further be noted that the graph-Matérn kernel $K_G$ can only be constructed when fully-labelled training data is available.

To optimize Equation (13), Riemannian Adam may for example be used, which is a first-order optimization method. First-order optimization methods rely on an initialization of the optimized variables. A typical choice for the initialization of the latent variables $X_{\text{init}}$ is the Principal Component Analysis (PCA) which spans a linear subspace such that the retained amount of variance in the data is maximized. The problem is that, typically, high-dimensional motions are highly nonlinear. Thus, the projection into the linear subspace cannot preserve the data's structure. Since GPLVM models require a good initialization to avoid getting stuck in local optima, initializing the latent variables with something other than PCA might offer an improved model performance. In view of that, according to various embodiments, the latent variables are initialized by optimizing the stress loss

$$X_{\text{init}} = \underset{X}{\arg\min} \sum_{i=1}^{N} \sum_{j=i+1}^{N} \left( \mathsf{d}_G(c_i, c_j) - \mathsf{d}_{\mathbb{H}_{\mathcal{L}}^{D_x}}(x_i, x_j) \right)^2 \tag{18}$$

This initialization is referred to as stress loss initialization. The minimization in equation (18) itself also requires an initialization for the latent variables, for which PCA can be used or random latent variables can be chosen.

In summary, the optimization process involves three steps:

(i) obtaining the initial latent variables from PCA.
(ii) optimizing the stress loss on these latent variables, which typically converges after a few seconds.
(iii) optimizing the full GPHDM as detailed in equation (13) on the stress loss initialized latent variables.

Similarly as the GPHLVM latent space, the GPHDM latent space can be exploited to plan motions by following trajectories in the low-dimensional latent space. The latent space geometry can be exploited to plan motions by following geodesics, i.e., shortest paths, between two embeddings in the hyperbolic latent space. However, such trajectories do not account for the uncertainty of the model and may pass through regions of the latent space where no training data is available to support motion prediction, causing the prediction to revert to the non-informative default case, i.e., to the Gaussian process (GP) mean. Therefore, according to various embodiments, geodesics in the hyperbolic latent space are computed according to a metric related to the high-dimensional motion metric, the so-called pullback metric. Geodesics computed according to the pullback metric tend to avoid regions with high uncertainty, thus leading to the generation of motions that follow the training data. Assuming a Euclidean observation space, the pullback metric $G \in \mathbb{R}^{D_x \times D_x}$ corresponding to a deterministic mapping function $f : \mathbb{R}^{D_x} \to \mathbb{R}^{D_y}$ is computed as

$$G = J^\top J \tag{19}$$

with $J \in \mathbb{R}^{D_y \times D_x}$ the Jacobian of f, i.e. the Gaussian process which maps embeddings (i.e. elements of the latent space) to real space poses. In the case of a GPLVM, the conditional distribution over the Jacobian is a Gaussian distribution

$$p(J) = \prod_{d=1}^{D_y} \mathcal{N}(J_d \mid \mu_{J,d}, \Sigma_J) \tag{20}$$

with mean and covariance

$$\mu_{J,d} = \partial k(x^*, X)(K_X + \sigma_y^2 I_N)^{-1} Y_d \,,$$
$$\Sigma_J = \partial^2 k(x^*, x^*) - \partial k(x^*, X)(K_X + \sigma_y^2 I_N)^{-1} \partial k(X, x^*) \tag{21}$$

This distribution induces the metric tensor to follow a non-central Wishart distribution

$$G = J^\top J \sim p(G) = W_{D_x}(D_y, \Sigma_J, \mathbb{E}[J]^\top \mathbb{E}[J]) \tag{22}$$

with mean prediction for the metric tensor given by

$$\mathbb{E}[G] = \mathbb{E}[J]^T \mathbb{E}[J] + D_y \Sigma_J \tag{23}$$

According to one embodiment, the computation of the pullback metric G is adapted to the hyperbolic latent space. This is achieved by considering the fact that the kernel k in (21) is a hyperbolic kernel and by adapting the computation of the first and second derivative of the kernel accordingly. The resulting pullback metric G is then used within the classical geodesic equation, which is solved to compute geodesics in the hyperbolic latent space. The resulting geodesics follow the transitions between classes defined in the taxonomy, while avoiding uncertain regions of the latent space. More precisely, once the pullback metric has been estimated, the motion trajectory generation boils down to first compute a geodesic on the GPHDM latent space, and decode this geodesic via the Gaussian process of the GPDM. Specifically, two different points $x, y \in \mathcal{M}$ (i.e., points corresponding to latent motion poses) are chosen and the shortest curve that connects these two points is determined by solving,

$$\gamma = \operatorname*{argmin}_{\gamma : [0,1] \to \mathcal{M}} l(\gamma) \quad \text{s.t.} \quad \gamma(0) = x \,, \gamma(1) = y \tag{24}$$

Given the metric $G_{\gamma(s)} \in \mathbb{R}^{D \times D}$ of a D-dimensional manifold $\mathcal{M}$, a geodesic can be obtained by solving a set of ordinary differential equations called the geodesic equations,

$$\ddot{\gamma}_k(s) + \sum_{i,j=1}^{D} \Gamma_{ij}^k \, \dot{\gamma}_i(s) \, \dot{\gamma}_j(s) = 0 \qquad \forall \, k \in \{1, ..., D\} \tag{25}$$

where $\gamma_i(s)$ denotes the i-th coordinate of the curve point and $\Gamma_{ij}^k \in \mathbb{R}$ are the Christoffel symbols

$$\Gamma_{ij}^k = \frac{1}{2} \sum_{m=1}^{D} (G_{\gamma(s)}^{-1})km \left( \frac{\partial(G_{\gamma(s)})mi}{\partial \gamma_j} + \frac{\partial(G_{\gamma(s)})mj}{\partial \gamma_i} - \frac{\partial(G_{\gamma(s)})ij}{\partial \gamma_m} \right) \tag{26}$$

Finally, the latent points representing the geodesics on the latent space of the GPDM can then be straightforwardly decoded to the original space (or observation space) via the Gaussian process of the model.

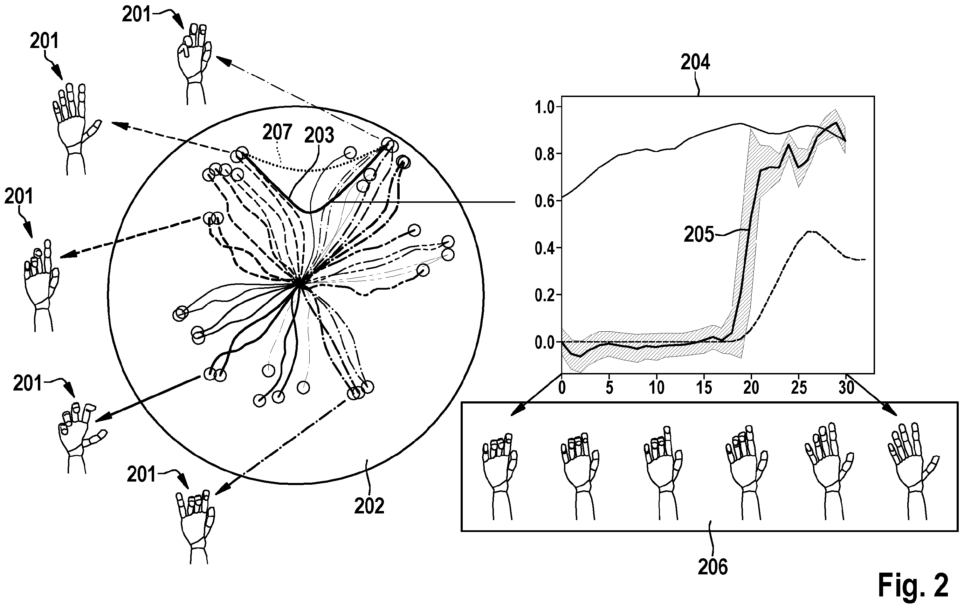

Figure 2 illustrates the control of a robotic hand according to the approach described above.

Hand poses 201 according to different grasp types are embedded into a 2D hyperbolic latent space 202. The dynamic prior of the GPHDM gives smooth latent trajectories, which are organized according to the grasp taxonomy thanks to the back-constraints and stress loss. Each point in the latent space 202 can be mapped to a hand pose (using the function f). Following a geodesic 203 according the pullback metric leads to trajectory following the taxonomy structure and passing through low-uncertainty regions of the latent space 202.

A diagram 204 shows the motion of one DoF of the hand 205 when following the geodesic 203: it transitions between the motion according one observed trajectory (where the geodesic 203 starts) to the motion according to another observed trajectory (where the geodesic 203 ends). Decoding the geodesic 203 results in a sequence of hand poses 206 with smooth and realistic interpolation between poses.

Following a geodesic 207 which follows the hyperbolic metric would instead pass through an area with high uncertainty.

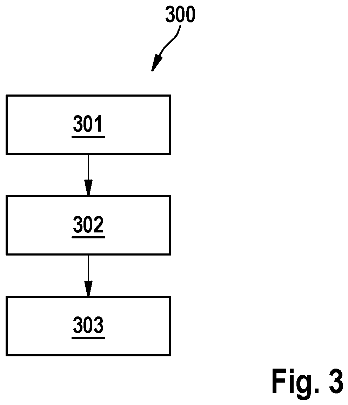

In summary, according to various embodiments, a method is provided as illustrated in figure 3.

Figure 3 shows a flow diagram 300 illustrating a method for controlling a robot (e.g. a robotic hand) according to an embodiment.

In 301, for each robotic pose (e.g. robotic hand pose) of a plurality of predetermined (e.g. observed) robot trajectories (e.g. robotic hand trajectories, i.e. sequences of hand poses, e.g. ending in a grasping pose), a respective embedding in an embedding space having the structure of a hyperbolic manifold is determined.

This is done by searching an optimum of an objective function which incites (i.e. rewards with a respective reward term (or, equivalently, loss term), for each of the predetermined robot trajectories, the embeddings of the robotic poses of the predetermined robot trajectory to follow pre-defined (hyperbolic space) dynamics of the embedding space (i.e. a hyperbolic dynamics prior, i.e. a probability distribution of sequences of embedding space elements (i.e. of poses in embedded form)). In other words, an optimization problem with such a kind of objective function is solved (or at least some iterations for solving it are performed since the "perfect" optimum is typically not found).

In 302, determining, for a starting pose from which the robot is to be controlled, a start embedding in the embedding space is determined and, for a desired end pose, an end embedding in the embedding space is determined. Further, a geodesic between the start embedding and the end embedding according to a pullback metric of the embedding space (with respect to Euclidean metric of the "real" robotic pose space and the mapping from embedding space to robotic pose space, i.e. the decoding function) is determined and, in 303, the robot is controlled according to a sequence of robotic poses given by the determined geodesic.

The approach of figure 3 can be used to compute a control signal for controlling a technical system, like e.g. a computer-controlled machine, like a robot (in particular with a hand-like end-effector), a vehicle, a domestic appliance, a power tool, a manufacturing machine, a personal assistant or an access control system. So, it can be used in any downstream task aimed at generating and/or predicting trajectories to control and/or estimate the motion of a virtual avatar or mechatronic system such as a robot, where the trajectories are associated to a particular taxonomy. More generally, it can be used for analyzing and visualizing high-dimensional data, associated to a hierarchical organization, into low-dimensional hyperbolic latent spaces.

Various embodiments may receive and use image data (i.e. digital images) from various visual sensors (cameras) such as video, radar, LiDAR, ultrasonic, thermal imaging, motion, sonar etc., for example as a basis for determining the desired end pose (e.g. a suitable grasp pose for grasping or otherwise manipulating an object).

The method of Figure 3 may be performed by one or more data processing devices (e.g. computers or microcontrollers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analogue circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

## Claims

1. A method for controlling a robot (104), comprising:

   Determining (301), for each robotic pose (201) of a plurality of predetermined robot trajectories, a respective embedding in an embedding space (202) having the structure of a hyperbolic manifold,
   by searching an optimum of an objective function which incites, for each of the predetermined robot trajectories, the embeddings of the robotic poses (201) of the predetermined robot trajectory to follow pre-defined dynamics of the embedding space (202);
   Determining (302), for a starting pose from which the robot (104) is to be controlled, a start embedding in the embedding space (202), and, for a desired end pose, an end embedding in the embedding space (202) and a geodesic (203) between the start embedding and the end embedding according to a pullback metric of the embedding space (202); and
   Controlling (303) the robot (104) according to a sequence of robotic poses (206) given by the determined geodesic (203).

2. The method of claim 1, wherein determining the embeddings comprises determining parameters of an encoder which maps robotic poses (201) to embeddings and wherein the start embedding and the end embedding are determined by encoding the starting pose and the end pose using the encoder, respectively.

3. The method of claim 1 or 2, wherein controlling the robot (104) according to the sequence of robotic poses (206) comprises determining the sequence of robotic poses (206) by mapping a sequence of embedding space elements given by the determined geodesic (203) to robotic pose space using a decoder and controlling the robot (104) to follow the sequence of robotic poses (206) and wherein the pullback metric is the pullback metric according to the Jacobian of the decoder and Euclidean metric of robotic poses.

4. The method of any one of claims 1 to 3, wherein the decoder implements a Gaussian process.

5. The method of any one of claims 1 to 4, wherein the objective function further comprises a term which, according to a taxonomy of robotic poses which includes a similarity measure between robotic poses, incites the embeddings to be determined such that the distance of embeddings of robotic poses in embedding space (202) reflects the similarity of the robotic poses according to the taxonomy.

6. A controller, configured to perform a method of any one of claims 1 to 5.

7. A computer program comprising instructions which, when executed by a computer, makes the computer perform a method according to any one of claims 1 to 6.

8. A computer-readable medium comprising instructions which, when executed by a computer, makes the computer perform a method according to any one of claims 1 to 6.

**Amended claims in accordance with Rule 137(2) EPC.**

1. A method for controlling a robot (104), comprising:

   Determining (301), for each robotic pose (201) of a plurality of predetermined robot trajectories, a respective embedding in an embedding space (202) having the structure of a hyperbolic manifold, wherein determining the embeddings comprises determining parameters of an encoder which maps robotic poses (201) to embeddings, by searching an optimum of an objective function which incites, for each of the predetermined robot trajectories, the embeddings of the robotic poses (201) of the predetermined robot trajectory to follow pre-defined dynamics of the embedding space (202);

Determining (302), for a starting pose from which the robot (104) is to be controlled, a start embedding in the embedding space (202), and, for a desired end pose, an end embedding in the embedding space (202) and a geodesic (203) between the start embedding and the end embedding according to a pullback metric of the embedding space (202), wherein the start embedding and the end embedding are determined by encoding the starting pose and the end pose using the encoder, respectively; and

Controlling (303) the robot (104) according to a sequence of robotic poses (206) given by the determined geodesic (203), wherein the sequence of robotic poses (206) is determined by mapping a sequence of embedding space elements given by the determined geodesic (203) to robotic pose space using a decoder which is configured to map from embedding space to robotic pose space and controlling the robot (104) to follow the sequence of robotic poses (206) and wherein the pullback metric is the pullback metric according to the Jacobian of the decoder and Euclidean metric of robotic poses.

2. The method of claim 1, wherein the decoder implements a Gaussian process.

3. The method of claim 1 or 2, wherein the objective function further comprises a term which, according to a taxonomy of robotic poses which includes a similarity measure between robotic poses, incites the embeddings to be determined such that the distance of embeddings of robotic poses in embedding space (202) reflects the similarity of the robotic poses according to the taxonomy.

4. A controller, configured to perform a method of any one of claims 1 to 3.

5. A computer program comprising instructions which, when executed by a robot controller, makes the robot controllerperform a method according to any one of claims 1 to 3.

6. A computer-readable medium comprising instructions which, when executed by a computer, makes the computer perform a method according to any one of claims 1 to 3.

Fig. 1

Fig. 2

EP 4 599 994 A1

300

301

302

303

Fig. 3

Europäisches Patentamt
European Patent Office
Office européen des brevets

# EUROPEAN SEARCH REPORT

**Application Number**

EP 24 15 6274

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Jaquier Noémie ET AL: "Bringing motion taxonomies to continuous domains via GPLVM on hyperbolic manifolds", arXiv.org, 1 February 2024 (2024-02-01), XP093187321, DOI: 10.48550/arxiv.2210.01672 Retrieved from the Internet: URL:https://arxiv.org/pdf/2210.01672v3 * See especially the abstract and sections 1 - 5 * | 1-8 | INV. B25J9/16 |

-----

**TECHNICAL FIELDS SEARCHED (IPC)**

B25J
G05B

The present search report has been drawn up for all claims

| Place of search | Date of completion of the search | Examiner |
|---|---|---|
| The Hague | 19 July 2024 | Tsirigkas, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. FEIX** ; **J. ROMERO** ; **H.-B. SCHMIEDMAYER** ; **A. M. DOLLAR** ; **D. KRAGIC**. The grasp taxonomy of human grasp types. *IEEE Transactions on Human-Machine Systems*, 2016, vol. 46 (1), 66-77
- **F. STIVAL** ; **S. MICHIELETTO** ; **M. COGNOLATO** ; **E. PAGELLO** ; **H. MÜLLER** ; **M. ATZORI**. A quantitative taxonomy of human hand grasps. *Journal of NeuroEngineering and Rehabilitation*, vol. 16 (28), 2019
- **J. ROMERO** ; **T. FEIX** ; **H. KJELLSTRÖM** ; **D. KRAGIC**. Spatio-temporal modeling of grasping actions. *IEEE/RSJ International Conference on Intelligent Robots and Systems*, 2010, 2103-2108
- **N. JAQUIER** ; **L. ROZO** ; **M. GONZÁLEZ-DUQUE** ; **V. BOROVITSKIY** ; **T. ASFOUR**. Bringing robotics taxonomies to continuous domains via GPLVM on hyperbolic manifolds. *arXiv:2210.01672 preprint*, 2022